# EUROPEAN PATENT APPLICATION

(11) **EP 4 799 874 A1**
(43) Date of publication of application: **02.09.2026**
(21) Application number: 24881554.0
(22) Date of filing: 21.10.2024
(51) Int. Cl.: B60R 21/233, B60R 21/231, B60R 21/2338

(54) **AIRBAG AND VEHICLE**

(30) Priority: 26.10.2023 CN 202311402827
(71) Applicant: Yanfeng International Automotive Technology Co., Ltd., Shanghai 201306 (CN)
(72) Inventor: QI, Jihao, Shanghai 201306 (CN); LI, Yang, Shanghai 201306 (CN)
(74) Representative: Colombo, Stefano Paolo
(86) International application number: PCT/CN2024/126091
(87) International publication number: WO 2025/087189

(57) **Abstract**

The present disclosure relates to an airbag comprising a main inflatable bag, wherein the main inflatable bag, in an expanded state, has a main body portion and two protruding portions extending outwardly from the main body portion on both sides of the main body portion, the two protruding portions together with the main body portion forming an intermediate recessed portion configured to receive an occupant's head during a collision event. The airbag is characterized in that it further comprises a lateral support structure configured to laterally support the protruding portions in the expanded state of the main inflatable bag, thereby reducing bending or pivoting of the protruding portion relative to the main body portion during a collision event, and/or the airbag comprises a pulling structure arranged within the main inflatable bag, the pulling structure being configured to pull the protruding portion to reduce bending or pivoting of the protruding portion relative to the main body portion during a collision event. The present disclosure also relates to a vehicle comprising said airbag.

## Description

### Technical Field

The present disclosure relates to the field of vehicle technology, and more particularly to an airbag and a vehicle including the airbag.

### Background of Invention

Modern vehicles are widely equipped with airbags as a safety protection measure for vehicle occupants. Upon detecting an impact during a vehicle collision, an inflator generates gas and delivers it into the interior of the airbag, causing the airbag to inflate and deploy. The inflated and deployed airbag can effectively prevent occupants from colliding with interior objects of the vehicle.

Vehicle technology is evolving rapidly. Influenced by the ongoing electrification and intelligent transformation of vehicles, interior designs have significantly changed compared to those in conventional vehicles. In many new energy vehicles, such as battery electric vehicles or hybrid electric vehicles, center console displays are increasingly adopted. During collisions-particularly oblique collisions, such as offset collisions-the occupant's head can slide out of the inflatable bag and strike the center console display. Additionally, in the case of oblique collisions, the occupant's head can also slide toward the A-pillar side. This can result in neck or head injuries caused by excessive head sliding or rotation.

To address this issue, the prior art typically provides a recessed portion in the intermediate region of the inflatable bag to receive the occupant's head, thereby preventing excessive head sliding or rotation.

Chinese patent application CN109476272A discloses an airbag comprising an inflatable bag that, in the expanded state, has two protruding corners extending forward (i.e., toward the vehicle occupant, or rearward in the vehicle coordinate system) from the front surface of the inflatable bag along the deployment direction. The inner lateral surfaces of these two protruding corners facing each other are respectively defined by multiple flexible pulling elements. During a vehicle collision event, the occupant's head enters between the two protruding corners, so that at least a major portion of the head is clamped between them, thereby reducing the rotational speed of the head and thus mitigating head injury. However, this Chinese patent application does not consider the risk that the protruding corners can bend or pivot at their root regions during an offset collision event.

### Summary of Invention

An object of the present disclosure is to provide an airbag capable of effectively preventing an occupant from sliding out of the protective area of the airbag during a collision event-particularly during an offset or oblique collision-and reducing injuries caused by head rotation about the neck.

Another object of the present disclosure is to provide a vehicle-particularly a passenger car, such as a vehicle powered solely by an internal combustion engine, a hybrid vehicle, or a battery electric vehicle-that includes the aforementioned airbag.

A first aspect of the present disclosure relates to an airbag comprising a main inflatable bag, wherein the main inflatable bag, in an expanded state, has a main body portion and two protruding portions extending outwardly from the main body portion on both sides of the main body portion, the two protruding portions together with the main body portion forming an intermediate recessed portion configured to receive an occupant's head during a collision event, characterized in that the airbag further comprises a lateral support structure arranged on the outer sides of the main body portion and the protruding portion and at least partially covering the outer lateral surfaces of the main body portion and the protruding portion, the lateral support structure being configured to laterally support the protruding portion in the expanded state of the main inflatable bag, thereby reducing bending or pivoting of the protruding portion relative to the main body portion during a collision event.

In an offset or oblique collision, the occupant contacts the airbag along an inclined direction. Due to inertia, the head rotates about the neck and slides in the inclined direction. Such sliding and rotation increase the severity of occupant injury. Therefore, the intermediate recessed portion formed by the protruding portions and the main body portion can restrict the sliding of the occupant's head in the vehicle width direction, avoiding collision of the occupant's head with interior protrusions, especially the center console screen, or with front-side components of the vehicle, especially the A-pillar, thereby providing a good restraining effect on the occupant. In a vehicle equipped with the airbag having the lateral support structure according to the present disclosure, during a collision event-particularly an offset or oblique collision event-the protruding portions can be well supported laterally by the lateral support structure, thereby effectively reducing bending or pivoting of the protruding portions relative to the main body portion, especially during such offset or oblique collisions. In other words, in the airbag according to the present disclosure, the protruding portions are not prone to bending or pivoting at its root even in an offset or oblique collision. Therefore, the airbag according to the present disclosure can reduce or even prevent sliding and rotation of the occupant's head during a collision, thereby mitigating or even preventing neck or head injuries caused by excessive head sliding or rotation. In the context of the present disclosure, "pivoting" can be understood as deflection or rotation of the protruding portion relative to the main body portion about the root of the protruding portion.

In some embodiments, the lateral support structure can be configured as an inflatable side chamber fluidly connected to the main inflatable bag, such that gas in the main inflatable bag can flow into the side chamber in the expanded state of the main inflatable bag, so as to form the expanded side chamber and thus provide a supporting effect for the protruding portion.

Herein, the airbag according to the present disclosure can be designed with a side chamber, wherein by configuring the lateral support structure as a side chamber, the protruding portions-particularly the lateral sides of the main inflatable bag-gain resistance against bending or pivoting. The structure of the side chamber provides lateral support to the protruding portions, thereby reducing the sliding and rotation of the occupant's head. Compared to conventional airbags, the side chamber according to the present disclosure can significantly enhance occupant safety protection performance with only a limited increase in inflatable bag's volume-particularly in offset or oblique collision events.

In some embodiments, in a lateral projection, the ratio of the overlapping area between the side chamber and the protruding portion to the area of the protruding portion can be between 0.3 and 1, preferably between 0.5 and 1, and particularly preferably between 0.5 and 0.8.

In some embodiments, in a lateral projection, the area of the side chamber can be greater than the area of the protruding portion. Specifically, the side chamber substantially fully covers the outer lateral surface of the protruding portion and partially covers the outer lateral surface of the main body portion. Thus, better support of the protruding portion by the side chamber can be achieved.

In some embodiments, the side chamber can continuously extend from the outer lateral surface of the main body portion to the outer lateral surface of the protruding portion and can at least partially cover the transition portion between the main body portion and the protruding portion. Thus, the side chamber extends from the main body portion "across" the transition portion between the main body portion and the protruding portion to reach the protruding portion, thereby enabling the side chamber to effectively provide lateral support to the protruding portion by using the main body portion as its supporting base.

In some embodiments, the top contour of the overlapping region between the side chamber and the main body portion can be configured as a convex arc, and/or the top contour of the overlapping region between the side chamber and the protruding portion can be configured as a convex arc. The convex arc-shaped shape of the corresponding top contour of the side chamber can achieve better support effect.

In some embodiments, the side chamber can be formed by a side panel and an additional patch arranged on the side panel, wherein, in the expanded state, an air-filled intermediate space is formed between the side panel and the patch, which intermediate space constitutes the side chamber. By forming the side chamber with the side panel and the patch, a simple and reliable construction of the side chamber can be achieved..

In some embodiments, the patch can be arranged with one end in the top region of the protruding portion and with the other end in the intermediate region on the outer side of the main body portion.

In some embodiments, the patch can be arranged outside the side panel. By arranging the patch outside the side panel, the patch can be more easily arranged-for example, by stitching-on the side panel.

In some embodiments, holes and/or slits can be provided in the region of the side panel overlapping with the patch, for allowing gas to flow from the main inflatable bag into the side chamber in the expanded state. The size and shape of the holes and/or slits are not limited, but the total area of the holes and/or slits should be sufficiently large to allow smooth gas flow into the side chamber. For example, the holes can be circular or elliptical. The slits can be elongated.

In some embodiments, the airbag includes a pulling element arranged inside the main inflatable bag, the pulling element being connected at one end to the main panel forming the occupant-facing surface of the main inflatable bag, and at the other end to the side panel section forming an inner lateral surface of the side chamber, wherein the pulling element is configured to establish a constrained tensile connection between the main panel and the side panel section in the expanded state of the main inflatable bag, thereby forming the protruding portion on the main body portion. By means of pulling elements, the protruding portions can be effectively formed.

In some embodiments, the connection part between the pulling element and the side panel can be at least partially covered by the side chamber. Thus, the side chamber "passes over" the connection part between the pulling element and the side panel, thereby enabling the main body portion to serve as a support base and achieving good support for the protruding portion.

In some embodiments, the patch can be arranged inside the side panel.

In some embodiments, holes and/or slits can be provided in the patch for allowing gas to flow from the main inflatable bag into the side chamber in the expanded state. As mentioned above, the size and shape of the holes and/or slits are not limited. For example, the holes can be circular or elliptical. The slits can be elongated.

In some embodiments, the airbag includes a pulling element arranged inside the main inflatable bag, the pulling element be connected at one end to a main panel forming the occupant-facing surface of the main inflatable bag, and at the other end to the patch forming the inner lateral surface of the side chamber, wherein the pulling element is configured to establish a constrained tensile connection between the main panel and the patch in the expanded state of the main inflatable bag, thereby forming the protruding portion on the main body portion. By means of pulling elements, the protruding portions can be effectively formed.

In some embodiments, the connection part between the pulling element and the patch is completely covered by the side chamber. Thus, the side chamber "passes over" the connection part between the pulling element and the patch, thereby enabling the main body portion to serve as a support base and achieving good support for the protruding portion.

In some embodiments, the pulling element can extend obliquely relative to the longitudinal direction of the main inflatable bag in the expanded state of the main inflatable bag. Thus, the pulling element can provide not only a longitudinal tensile force component in the longitudinal direction of the main inflatable bag but also a transverse tensile force component in the transverse direction of the main inflatable bag, thereby being able to eliminate the potentially longitudinally and transversely arranged pulling elements.

In some embodiments, the lateral support structure can be configured as a reboundable elastic element, the elastic element being configured to reduce bending or pivoting of the protruding portion through its own restoring force during a collision event. Thus, alternatively or additionally to the side chamber, a reboundable elastic element can be used to achieve good support effects.

In some embodiments, the reboundable elastic element can at least partially abut against the outer lateral surface of the main body portion and the outer lateral surface of the protruding portion. Thus, good support for the protruding portion can be achieved.

A second aspect of the present disclosure relates to an airbag comprising a main inflatable bag, wherein the main inflatable bag, in an expanded state, has a main body portion and two protruding portions extending outwardly from the main body portion on both sides of the main body portion, the two protruding portions together with the main body portion forming an intermediate recessed portion configured to receive an occupant's head during a collision event, characterized in that the airbag includes a pulling structure arranged within the main inflatable bag, the pulling structure being configured to pull the protruding portion to reduce bending or pivoting of the protruding portion relative to the main body portion during a collision event.

By providing, according to the present disclosure, a pulling structure arranged within the main airbag for pulling the protruding portion, the pulling structure is capable of holding back the protruding portion during a collision event, thereby suppressing the tendency of the protruding portion to bend or pivot.

In some embodiments, the connection part of the pulling structure on the protruding portion can be located between the outer intermediate region and the top of the protruding portion. By arranging the pulling location of the internal pulling structure on the protruding portion between the intermediate region of the outer side of the protruding portion and the top of the protruding portion, a longer lever arm can be provided between the root of the protruding portion and the pulling location, thereby achieving a better anti-bending or anti-pivoting effect.

In some embodiments, the pulling structure comprises a first pulling element and a second pulling element, the first pulling element being connected at one end to an intermediate portion of the second pulling element, thereby forming a crossed Y-shaped pulling structure, wherein one leg of the Y-shaped structure is connected at its end to the protruding portion to reduce bending or pivoting of the protruding portion relative to the main body portion during a collision event.

Through the Y-shaped pulling structure according to the present disclosure, the protruding portions-particularly the lateral sides of the main inflatable bag-gain resistance against bending or pivoting. The Y-shaped pulling structure provides internal pulling action to the protruding portions, thereby reducing head sliding and rotation. Compared to conventional airbags, the Y-shaped pulling structure according to the present disclosure can significantly enhance occupant safety protection performance-particularly in offset or oblique collision events-with a simple configuration of the pulling structure.

In some embodiments, the first pulling element can be connected at the other end to a main panel forming the occupant-facing surface of the main inflatable bag.

In some embodiments, the second pulling element can be connected at one end to the protruding portion of the main inflatable bag and at the other end to another part of the airbag.

In some embodiments, one end of the second pulling element can be connected to the protruding portion of the main inflatable bag at the top of the protruding portion.

In some embodiments, the contour of the top of the second pulling element arranged at the protruding portion is configured as a convex arc. Thus, better pulling effects can be achieved.

In some embodiments, the other end of the second pulling element can be connected to an outer lateral section of the main body portion of the main inflatable bag.

In some embodiments, the top contour of the second pulling element at the main body portion can be shaped as a convex arc, thereby achieving better pulling effects.

In some embodiments, the airbag can be a frontal airbag.

In some embodiments, the airbag can be a passenger-side airbag.

A third aspect of the present disclosure relates to a vehicle comprising the airbag according to any embodiment of the present disclosure.

In some embodiments, the vehicle can include a center console display mounted on the instrument panel and an A-pillar, the airbag being installed in the instrument panel and configured to be activated during a vehicle collision event to prevent the occupant's head from impacting the center console display and/or sliding toward the A-pillar.

The technical features mentioned above, the technical features to be mentioned below, and the technical features shown separately in the drawings can be combined arbitrarily, provided that the combined technical features are not mutually contradictory. All feasible combinations of features are explicitly described herein as technical content. Any individual sub-feature included among multiple sub-features within the same sentence can be applied independently without necessarily being applied together with the other sub-features.

### Brief Description of Drawings

The present disclosure is further illustrated below with reference to schematic drawings and exemplary embodiments.
Figure 1 shows a schematic side view of an airbag according to one embodiment of the present disclosure in the expanded state.
Figure 2 shows a schematic top view of the airbag of Figure 1.
Figure 3 shows a schematic view of the airbag of Figure 1 observed from behind the occupant looking forward.
Figure 4 shows a schematic axonometric view of the airbag of Figure 1 in a fully inflated condition.
Figure 5a shows a plan view of a pulling element of an airbag according to one embodiment of the present disclosure.
Figure 5b shows a plan view of a main panel of an airbag according to one embodiment of the present disclosure.
Figure 6a shows a schematic cross-sectional structural view of an airbag according to a first embodiment of the present disclosure.
Figure 6b shows a plan view of a side panel of the airbag according to the first embodiment of the present disclosure.
Figure 6c shows a plan view of a patch of the airbag according to the first embodiment of the present disclosure.
Figure 6d shows a schematic view showing the connection location of a pulling element on the side panel of the airbag according to the first embodiment of the present disclosure.
Figure 7a shows a schematic cross-sectional structural view of an airbag according to a second embodiment of the present disclosure.
Figure 7b shows a plan view of a side panel of the airbag according to the second embodiment of the present disclosure.
Figure 7c shows a plan view of a patch of the airbag according to the second embodiment of the present disclosure.
Figure 7d shows a schematic view showing the connection location of a pulling element on the patch of the airbag according to the second embodiment of the present disclosure.
Figure 8a shows a schematic cross-sectional structural view of an airbag according to a third embodiment of the present disclosure.
Figure 8b shows a plan view of a side panel of the airbag according to the third embodiment of the present disclosure.
Figure 8c shows a plan view of a second pulling element of the airbag according to the third embodiment of the present disclosure.
Figure 8d shows a schematic view showing the connection location of a first pulling element on the second pulling element of the airbag according to the third embodiment of the present disclosure.

### Detailed Description of Drawings

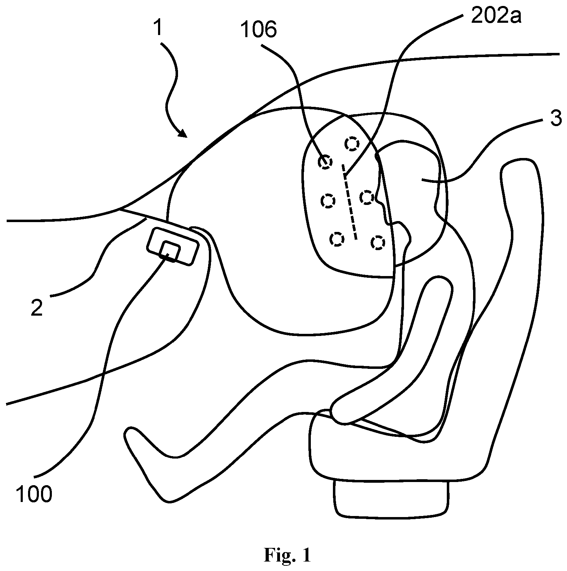

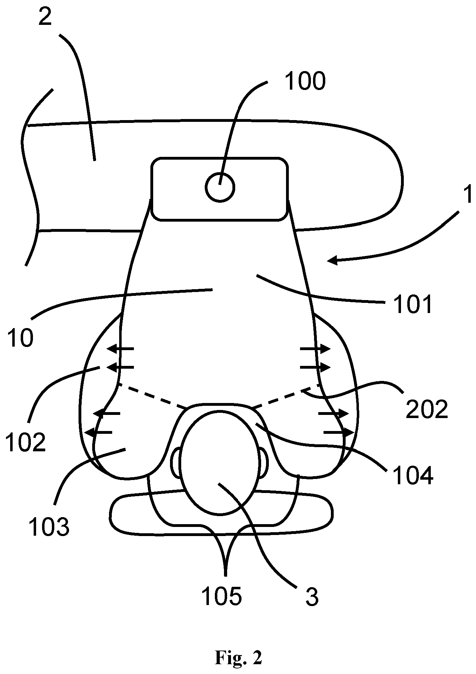

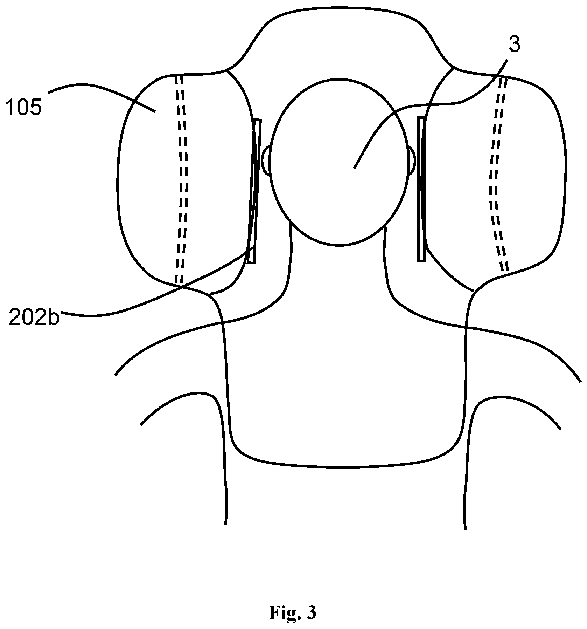

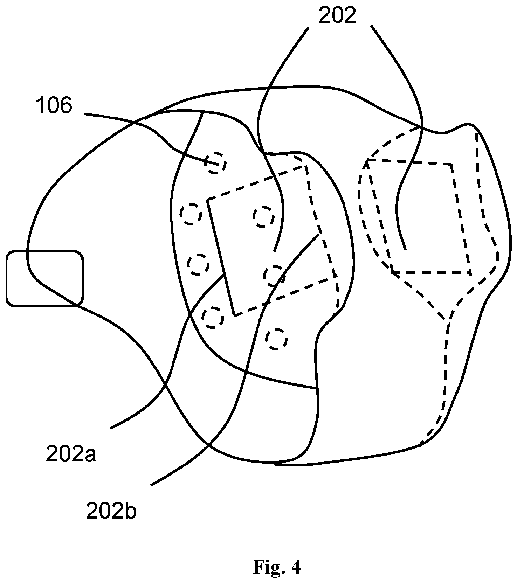

Figure 1 shows a schematic side view of an airbag according to one embodiment of the present disclosure in the expanded state. Figure 2 shows a schematic top view of the airbag of Figure 1. Figure 3 shows a schematic view of the airbag of Figure 1 observed from behind the occupant looking forward. Figure 4 shows a schematic axonometric view of the airbag of Figure 1 in a fully inflated condition. The operating principle of the airbag 1 according to the first embodiment will be described in detail below with reference to Figures 1 to 4.

In an exemplary embodiment, the airbag 1 can be a frontal airbag, and more specifically, a passenger-side airbag. The airbag 1 can be installed within the vehicle's instrument panel 2. Additionally, a center console display-particularly a floating-type center console display-can be mounted on the instrument panel 2, which can extend from the center console position of the instrument panel toward the passenger side. The vehicle can be a passenger car or a commercial vehicle, particularly an electric vehicle such as a battery electric vehicle or a hybrid electric vehicle.

As clearly seen in conjunction with Figures 1 to 2, the airbag 1 according to one embodiment of the present disclosure includes a main inflatable bag 10. In the expanded state, the main inflatable bag 10 can have a main body portion 101 and two protruding portions 103 extending outwardly from the main body portion 101 on both sides of the main body portion 101. The two protruding portions 103 and the main body portion 101 can together form an intermediate recessed portion 104. The recessed portion 104 can be configured to receive the occupant's head 3 during a collision event.

In addition to the main body portion 101 and the two protruding portions 103, the airbag 1 can further include a lateral support structure configured as side chamber 102. The side chamber 102 can be arranged on the outer side of the main body portion 101 and the protruding portion 103 and can at least partially cover the main body portion 101 and the protruding portion 103. During a vehicle collision event, an inflator 100 can be activated to inflate the main inflatable bag 10. Gas within the main inflatable bag 10 can flow, as indicated by arrows in Figure 2, through fluid communication structures provided between the main body portion 101 and/or the protruding portion 103 and the side chamber 102, thereby inflating the side chambers 102 nearly simultaneously with the main inflatable bag 10, and thus the side chambers 102 can serve as gas-filled structures to provide support to the protruding portions 103. As mentioned above, during a collision-especially an offset collision-the occupant's head 3 can be received within the recessed portion 104 to prevent it from sliding out of or rotating relative to the airbag 1. However, under certain circumstances, the protruding portions 103 might also, due to structural reasons or complex offset collision scenarios, for example, bend or pivot at their root. At this point, the occupant's head 3 may slide out of the recessed portion 104 by moving over the protruding portions 103. To at least reduce or even prevent bending or pivoting of the protruding portions 103 relative to the main body portion 101, side chambers 102 are provided in the embodiment shown in Figures 1 and 2. The side chambers 102 extend from the main body portion 101 to the protruding portions 103 and thereby support the protruding portions 103 with the main body portion 101 serving as a supporting base. In Figure 2, the protruding structure 105 formed jointly by the protruding portions 103 and the side chambers 102 can be clearly seen. The side chambers 102 have a certain volume and achieve an increase in thickness in the vehicle width direction, which on one hand reduces or prevents bending or pivoting of the protruding portions 103 relative to the main body portion 101, thereby preventing rotation and sliding of the occupant's head 3 during oblique collisions. On the other hand, the side chambers 102, by increasing the thickness of the inflated area in the lateral direction of the vehicle, can also enhance protection performance during side impacts.

The gas in the main inflatable bag 10 mentioned above can enter the side chambers 102 through a fluid communication structure. Here, the fluid communication structure may be a hole 106, particularly a circular vent hole, as schematically illustrated in Figure 1. The hole 106 may be arranged in the overlapping region between the main body portion 101 and the side chamber 102. Alternatively or additionally, the hole 106 may also be arranged in the overlapping region between the protruding portion 103 and the side chamber 102. In other embodiments, the fluid communication structure may also be a slit. The slit may, for example, be elongated in shape. Both the holes 106 and slits can be designed such that sufficient gas flows from the main inflatable bag 10 into the side chambers 102 with minimal resistance. The shape, size, number, and arrangement of holes 106 and slits may be selected as needed.

In the present disclosure, one side chamber 102 is provided for each of the two protruding portions 103-namely, a left-side chamber 102 and a right-side chamber 102. In this embodiment, these two protruding portions 103 and the two side chambers 102 are configured symmetrically with respect to the central axis of the main inflatable bag 10. For simplicity, the following description refers only to one of the two protruding portions 103 and one of the two side chambers 102. Of course, in other embodiments, the left and right protruding portions 103 and side chambers 102 may be configured differently as required.

Besides the side chambers 102, other lateral support structures may also be envisioned. In alternative embodiments, the lateral support structure may, for example, be constructed as a reboundable elastic element. Such an elastic element may be configured to reduce bending or pivoting of the protruding portion 103 during a collision event by means of its own restoring force. The reboundable elastic element may, for example, be a flexible elastic sheet or strip. To achieve good support for the protruding portion 103, the reboundable elastic element may abut against the outer lateral surface of the main body portion 101 and the outer lateral surface of the protruding portion 103.

Figures 1 and 2 illustrate the suppression of the tendency of protruding portion 103 to bend or pivot by the supporting action provided by the lateral support structure. In addition, it is also conceivable to suppress the tendency of protruding portion 103 to bend or pivot by pulling on protruding portion 103 from the inside, which will be described below.

In Figure 2, a pulling element 202 for forming the protruding portion 103 is schematically indicated by dashed lines in the root region of the protruding portion 103. The connection part 202a of this pulling element 202 on the outer lateral surface of the main inflatable bag 10 is also indicated by dashed lines in the side view shown in Figure 1. One end of the pulling element 202 is connected to the portion forming the occupant-facing surface of the main inflatable bag 10, while its other end is connected to the portion forming the inner lateral surface of the side chamber 102. The pulling element 202 is configured to establish a constraining tensile connection, in the expanded state of the main inflatable bag 10, between the occupant-facing surface portion of the main inflatable bag 10 and the inner lateral surface portion of the side chamber 102, thereby forming the protruding portion 103 on the main body portion 101. As can be seen in Figure 2, the pulling element 202 can extend obliquely relative to the longitudinal direction of the main inflatable bag 10 in the expanded state of the main inflatable bag 10. Thus, the pulling element 202 can simultaneously generate tensile force components in both the longitudinal and lateral directions of the main inflatable bag 10, thus being able to eliminate the transversely arranged transverse pulling element and the longitudinally arranged longitudinal pulling element. The pulling element 202 may be a tether, especially a flexible tether. Within the main inflatable bag, the pulling element 202 may be configured as a side tether. Of course, in other embodiments, the protruding portion 103 may also be formed by a pre-defined shaping structure of the main inflatable bag 10 without the use of the pulling element 202.

Figure 3 is a schematic view of the airbag 1 of Figure 1 as observed from behind the occupant looking forward. Here, the connection part 202b of the pulling element 202 to the occupant-facing surface portion of the main inflatable bag 10 can be clearly seen. Here, the protruding structure 105 jointly formed by the protruding portion 103 and the side chamber 102 can also be seen. Combined with Figures 2 and 3, it can be seen that this protruding structure 105 protrudes not only in the longitudinal direction but also in the lateral direction. The protrusion in the longitudinal direction forms the recessed portion 104 for receiving the occupant's head 3, while the protrusion in the lateral direction, on one hand, provides a supporting effect for the protruding portion 103, thereby helping to suppress bending or pivoting of the protruding portion 103, and on the other hand, increases the lateral thickness of the inflatable bag, thereby enhancing the buffering distance during side impacts.

Figure 4 shows a schematic axonometric view of the airbag of Figure 1 in a fully inflated condition. From Figure 4, the two connection parts 202a, 202b of the pulling element 202 in the root region of the protruding portion 103 of the main inflatable bag 10 can be clearly seen. Additionally, the schematic arrangement of holes 106 for allowing gas to flow from the main inflatable bag 10 into the side chamber 102 can also be seen. As shown in Figure 4, the area of the side chamber 102 is larger than that of the protruding portion 103, thereby being able to ensure good support of the protruding portion 103 by the side chamber 102. In particular, the side chamber 102 substantially fully covers the outer lateral surface of the protruding portion 103. Moreover, the side chamber 102 partially covers the outer lateral surface of the main body portion 101. In other embodiments, the side chamber 102 may also only partially cover the outer lateral surface of the protruding portion 103. What is important here is that the side chamber 102 continuously extends from the outer lateral surface of the main body portion 101 to the outer lateral surface of the protruding portion 103 and thereby covers the transition portion from the main body portion 101 to the protruding portion 103. In Figure 4, the side chamber 102 substantially fully covers the transition portion from the main body portion 101 to the protruding portion 103. In other embodiments, partial coverage of this transition portion from the main body portion 101 to the protruding portion 103 by the side chamber 102 is also conceivable. To provide good support effect, as shown in Figure 4, the top contour of the overlapping region between the side chamber 102 and the main body portion 101 may be configured as a convex arc. Similarly, the top contour of the overlapping region between the side chamber 102 and the protruding portion 103 may also be configured as a convex arc.

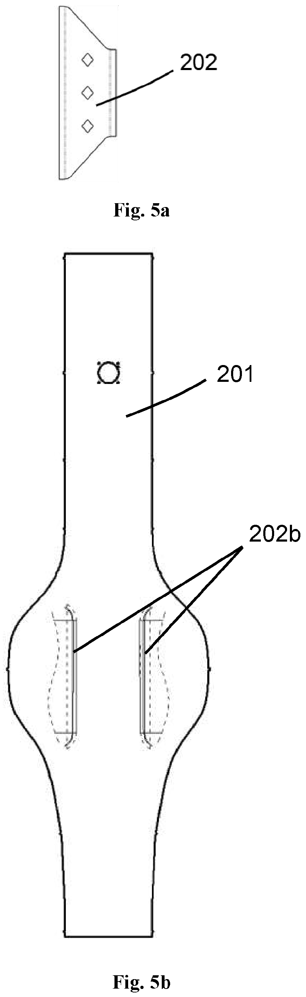

Figure 5a is a plan view of the pulling element 202 of the airbag 1 according to one embodiment of the present disclosure, and Figure 5b is a plan view of the main panel 201 of the airbag 1 according to one embodiment of the present disclosure. Here, as can be seen in Figure 5a, the pulling element 202 is configured as a side tether, which may have a trapezoidal shape. Of course, other shapes for the side tether are also conceivable. In this embodiment, one end of the pulling element 202 can be connected to the main panel 201, and the other end thereof can be connected to the side panel 203 or the patch 204, wherein the connection direction of the end, which is connected to the main panel 201, is along the vertical direction of the vehicle body or at a relatively small inclination angle, whereas the connection direction of the other end, which is connected to the side panel 203 or the patch 204, is oriented vertically or at a certain angle relative to the vertical direction. In Figure 5b, the connection part 202b of the pulling element 202 on the main panel 201 can be seen.

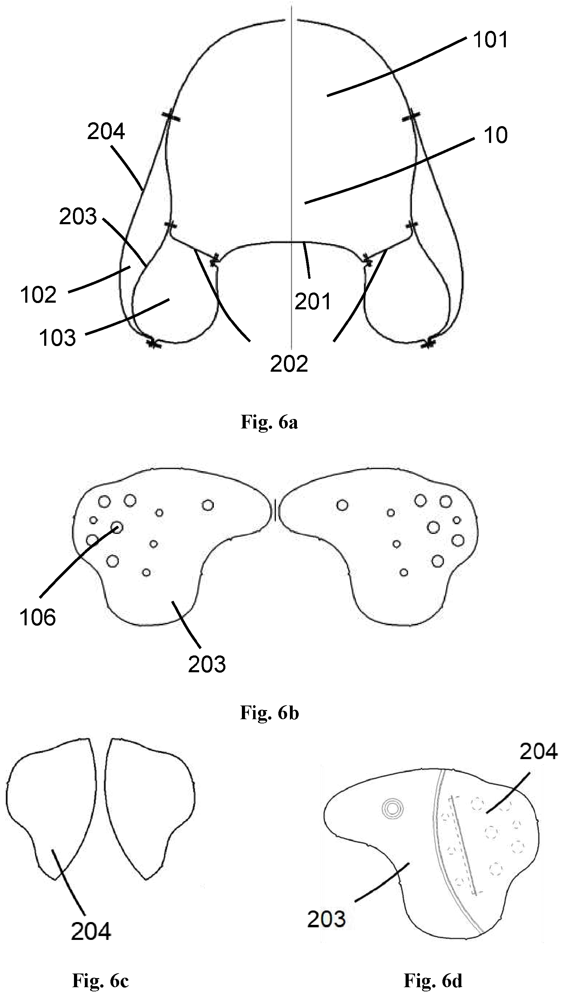

Figure 6a is a schematic cross-sectional structural view of the airbag 1 according to a first embodiment of the present disclosure. Figure 6b is a plan view of the side panel 203 of the airbag 1 according to the first embodiment. Figure 6c is a plan view of the patch 204 of the airbag 1 according to the first embodiment. Figure 6d is a schematic view showing the connection location of the pulling element 202 on the side panel 203 according to the first embodiment. Regarding the arrangement of the main inflatable bag 10, the side chamber 102, and the pulling element 202, reference may be made to the description of Figures 1 to 4. As shown in Figure 6a, the side chamber 102 is formed by the side panel 203 together with the patch 204 additionally arranged on the side panel 203, wherein the patch 204 is arranged on the outside of the side panel 203. In the expanded state, an air-filled intermediate space is formed between the side panel 203 and the patch 204, which intermediate space constitutes the side chamber 102. As shown in Figure 6a, the patch 204 can be arranged with one end in the top region of the protruding portion 103 and with the other end in the intermediate region on the outer side of the main body portion 101. The pulling element 202 arranged inside the main inflatable bag 10 is connected at one end to the main panel 201 forming the occupant-facing surface of the main inflatable bag 10 and at the other end to a section of the side panel 203 forming the inner lateral surface of the side chamber 102. The pulling element 202 is configured to establish a constraining tensile connection between the main panel 201 and the section of the side panel 203 in the expanded state of the main inflatable bag 10, thereby forming the protruding portion 103 on the main body portion 101. As clearly seen in Figure 6b, multiple holes 106 are provided in the region of the side panel 203 overlapping with the patch 204 to allow gas to flow from the main inflatable bag 10 into the side chamber 102 in the expanded state. As previously mentioned, slits may alternatively or additionally be provided in the overlapping region between the side panel 203 and the patch 204 instead of or in addition to the holes 106. As shown in Figure 6c, the patch 204 has a convexly arcuate contour at both of its top ends. As clearly seen in Figure 6d, the connection part of the pulling element 202 to the side panel 203 is completely covered by the side chamber 102 or the patch 204. In other embodiments, the connection part of the pulling element 202 to the side panel 203 may also be only partially covered by the side chamber 102 or the patch 204. What is essential is that the patch 204 continuously extends from the main body portion 101 through the connection part into the region of the protruding portion 103. Here, the patch 204 may partially cover the outer lateral surface of the main body portion 101. Furthermore, the patch 204 may substantially fully cover the outer lateral surface of the protruding portion 103.

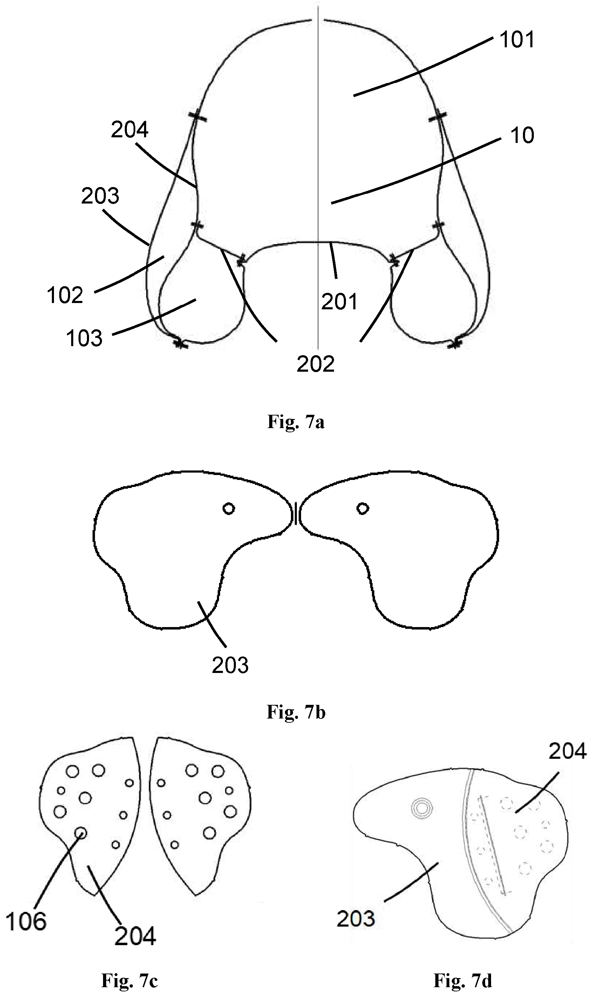

Figure 7a is a schematic cross-sectional structural view of the airbag 1 according to a second embodiment of the present disclosure. Figure 7b is a plan view of the side panel 203 of the airbag 1 according to the second embodiment. Figure 7c is a plan view of the patch 204 of the airbag 1 according to the second embodiment. Figure 7d is a schematic view showing the connection location of the pulling element 202 on the patch 204 according to the second embodiment. The arrangement of the main inflatable bag 10, the side chamber 102, and the pulling element 202 in the second embodiment is essentially similar to that of the first embodiment, with the difference lying in the configuration of the side chamber 102. As shown in Figure 7a, the side chamber 102 is likewise formed by the side panel 203 together with the patch 204 additionally arranged on the side panel 203. However, unlike in the first embodiment, in the second embodiment the patch 204 is arranged inside the side panel 203. In the expanded state, an air-filled intermediate space is formed between the side panel 203 and the patch 204, which intermediate space constitutes the side chamber 102. As shown in Figure 7a, the patch 204 is similarly arranged with one end in the top region of the protruding portion 103 and with the other end in the intermediate region on the outer side of the main body portion 101; however, at this point the patch 204 is arranged inside the side panel 203 and thus serves as part of both the main body portion 101 and the protruding portion 103. The pulling element 202 arranged inside the main inflatable bag 10 is connected at one end to the main panel 201 forming the occupant-facing surface of the main inflatable bag 10 and at the other end to the patch 204 forming the inner lateral surface of the side chamber 102. The pulling element 202 is configured to establish a constraining tensile connection between the main panel 201 and the patch 204 in the expanded state of the main inflatable bag 10, thereby forming the protruding portion 103 on the main body portion 101. In the second embodiment, as shown in Figure 7b, since the side panel 203 serves as the outermost part, no holes or slits for allowing gas into the side chamber 102 are provided on the side panel 203. Instead, the holes 106 for allowing gas to flow into the side chamber 102 are provided in the patch 204, as shown in Figure 7c. Slits may alternatively or additionally be provided in the patch 204 instead of or in addition to the holes 106. As shown in Figure 7c, the patch 204 also has a convexly arcuate contour at both of its top ends. As clearly seen in Figure 7d, the connection part of the pulling element 202 to the patch 204 is completely covered by the side chamber 102.

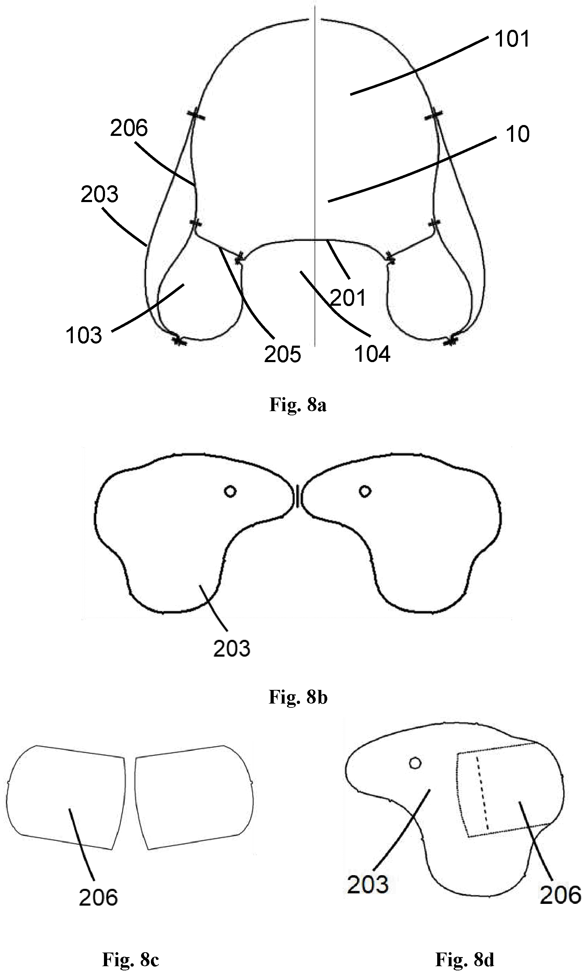

Figure 8a is a schematic cross-sectional structural view of the airbag 1 according to a third embodiment of the present disclosure. Figure 8b is a plan view of the side panel 203 of the airbag 1 according to the third embodiment. Figure 8c is a plan view of a second pulling element 206 of the airbag 1 according to the third embodiment. Figure 8d is a schematic view showing the connection location of a first pulling element 205 on the second pulling element 206 according to the third embodiment. Unlike the first and second embodiments, in the third embodiment the tendency of the protruding portion 103 to bend or pivot is primarily suppressed by the pulling action of a pulling structure. In the third embodiment, the airbag 1 may include a main inflatable bag 10, which in the expanded state has a main body portion 101 and two protruding portions 103 extending outwardly from the main body portion 101on both sides of the main body portion 101. These two protruding portions 103, together with the main body portion 101, may form a intermediate recessed portion 104 configured to receive the occupant's head during a collision event. As shown in Figure 8a, the airbag 1 may include a first pulling element 205 and a second pulling element 206, wherein one end of the first pulling element 205 is connected to the intermediate portion of the second pulling element 206, thereby forming a crossed Y-shaped pulling structure. This Y-shaped pulling structure connects at the end of one leg to the protruding portion 103, thereby reducing bending or pivoting of the protruding portion 103 relative to the main body portion 101 during a collision event. In other embodiments, other types of pulling structures arranged within the main inflatable bag 10 may also be envisioned, wherein the other types of pulling structures are also configured to pull the protruding portion 103 to reduce bending or pivoting of the protruding portion 103 relative to the main body portion 101 during a collision event. What is critical here is the connection part of the pulling structure on the protruding portion 103, as the distance of this connection part from the root of the protruding portion 103 determines the lever arm length. Preferably, the connection part of the pulling structure on the protruding portion 103 is located between the intermediate region of the outer side of the protruding portion 103 and the top of the protruding portion 103. In particular, as shown in Figure 8a, one end of the second pulling element 206 of the pulling structure is connected to the protruding portion 103 of the main inflatable bag 10 at the top of the protruding portion 103. Additionally, the other end of the second pulling element 206 of the pulling structure is connected to an outer lateral section of the main body portion 101 of the main inflatable bag 10, particularly to the intermediate region on the outer side of the main body portion 101. In other embodiments, one end of the second pulling element 206 may also be connected to other parts of the protruding portion 103. Furthermore, the other end of the second pulling element 206 may also be connected to other parts of the airbag 1. In particular, the other end of the second pulling element 206 may also be connected to a stationary component of the airbag 1. Both the first pulling element 205 and the second pulling element 206 may also be configured as flexible tethers. It can also be seen from Figure 8a that the first pulling element 205 may extend obliquely relative to the longitudinal direction of the main inflatable bag 10 in the expanded state of the main inflatable bag 10. Figure 8b shows the side panel 203, which partially forms the outer sides of the main body portion 101 and the protruding portion 103. Figure 8c shows the second pulling element 206, wherein the top contour of the second pulling element 206 is convexly arcuate. As shown in Figure 8d, the second pulling element 206 continuously extends from the region of the side panel 203 forming the main body portion 101 across the connection part between the first pulling element 205 and the second pulling element 206 to the top of the protruding portion 103.

It should be noted that the terminology used herein is for the purpose of describing particular aspects only and is not intended to limit the scope of the disclosure. As used herein, the singular forms "a," "an," and "the" include plural referents unless the context clearly indicates otherwise. It is understood that terms such as "comprise," "include," and similar expressions, when used in the application, specify the presence of stated features, steps, elements, and/or components, but do not preclude the presence or addition of one or more other features, steps, elements, components, and/or groups thereof. As used herein, the term "and/or" includes any and all combinations of one or more of the associated listed items. In the description of the drawings, like reference numerals always denote like elements.

For clarity, the thicknesses of elements in the drawings may be exaggerated. It is further understood that when an element is referred to as being "on," "coupled to," or "connected to" another element, it may be directly on, coupled, or connected to the other element, or intervening elements may be present. In contrast, when the terms "directly on," "directly coupled to," and "directly connected to" are used herein, they indicate the absence of intervening elements. Other words used to describe the relationship between elements should be interpreted similarly, e.g., "between" versus "directly between," "attached" versus "directly attached," "adjacent" versus "directly adjacent," etc.

Terms such as "top," "bottom," "above," "below," "upper," "lower," etc., are used herein to describe the relationship of one element, layer, or region to another as illustrated in the figures. It is understood that these terms are intended to encompass other orientations of the device in addition to those depicted in the figures.

It is understood that although terms such as "first," "second," etc., may be used herein to describe various elements, these elements should not be limited by these terms. These terms are used only to distinguish one element from another. Thus, a first element could be termed a second element without departing from the teachings of the present disclosure.

It is also contemplated that all exemplary embodiments disclosed herein may be combined with each other in any manner. Furthermore, all individual technical features disclosed in this application may be combined with each other in any manner, provided that the combined technical features are not mutually contradictory. All technically feasible combinations of features constitute technical content disclosed in this application.

## Claims

1. An airbag, comprising a main inflatable bag, wherein the main inflatable bag, in an expanded state, has a main body portion and two protruding portions extending outwardly from the main body portion on both sides of the main body portion, the two protruding portions together with the main body portion forming an intermediate recessed portion configured to receive an occupant's head during a collision event, **characterized in that** the airbag further comprises a lateral support structure arranged on the outer sides of the main body portion and the protruding portion and at least partially covering the outer lateral surfaces of the main body portion and the protruding portion, the lateral support structure being configured to laterally support the protruding portion in the expanded state of the main inflatable bag, thereby reducing bending or pivoting of the protruding portion relative to the main body portion during a collision event.

2. The airbag according to claim 1, **characterized in that** the lateral support structure is configured as an inflatable side chamber fluidly connected to the main inflatable bag, such that gas in the main inflatable bag can flow into the side chamber in the expanded state of the main inflatable bag, so as to form the expanded side chamber and thus provide a supporting effect for the protruding portion.

3. The airbag according to claim 2, **characterized in that**, in a lateral projection, the ratio of the overlapping area between the side chamber and the protruding portion to the area of the protruding portion is between 0.3 and 1.

4. The airbag according to claim 2, **characterized in that**, in a lateral projection, the area of the side chamber is greater than the area of the protruding portion.

5. The airbag according to claim 2, **characterized in that** the side chamber continuously extends from the outer lateral surface of the main body portion to the outer lateral surface of the protruding portion and at least partially covers the transition portion between the main body portion and the protruding portion.

6. The airbag according to claim 2, **characterized in that**
the top contour of the overlapping region between the side chamber and the main body portion is configured as a convex arc, and/or
the top contour of the overlapping region between the side chamber and the protruding portion is configured as a convex arc.

7. The airbag according to any one of claims 2 to 6, **characterized in that** the side chamber is formed by a side panel and an additional patch arranged on the side panel, wherein, in the expanded state, an air-filled intermediate space is formed between the side panel and the patch, which intermediate space constitutes the side chamber.

8. The airbag according to claim 7, **characterized in that** the patch is arranged with one end in the top region of the protruding portion and with the other end in the intermediate region on the outer side of the main body portion.

9. The airbag according to claim 7, **characterized in that** the patch is arranged outside the side panel.

10. The airbag according to claim 9, **characterized in that** holes and/or slits are provided in the region of the side panel overlapping with the patch, for allowing gas to flow from the main inflatable bag into the side chamber in the expanded state.

11. The airbag according to claim 9, **characterized in that** the airbag includes a pulling element arranged inside the main inflatable bag, the pulling element being connected at one end to the main panel forming the occupant-facing surface of the main inflatable bag, and at the other end to the side panel section forming an inner lateral surface of the side chamber, wherein the pulling element is configured to establish a constrained tensile connection between the main panel and the side panel section in the expanded state of the main inflatable bag, thereby forming the protruding portion on the main body portion.

12. The airbag according to claim 11, **characterized in that** the connection part between the pulling element and the side panel is at least partially covered by the side chamber.

13. The airbag according to claim 7, **characterized in that** the patch is arranged inside the side panel.

14. The airbag according to claim 13, **characterized in that** holes and/or slits are provided in the patch for allowing gas to flow from the main inflatable bag into the side chamber in the expanded state.

15. The airbag according to claim 13, **characterized in that** the airbag includes a pulling element arranged inside the main inflatable bag, the pulling element be connected at one end to a main panel forming the occupant-facing surface of the main inflatable bag, and at the other end to the patch forming the inner lateral surface of the side chamber, wherein the pulling element is configured to establish a constrained tensile connection between the main panel and the patch in the expanded state of the main inflatable bag, thereby forming the protruding portion on the main body portion.

16. The airbag according to claim 15, **characterized in that** the connection part between the pulling element and the patch is completely covered by the side chamber.

17. The airbag according to claim 11 or 15, **characterized in that** the pulling element extends obliquely relative to the longitudinal direction of the main inflatable bag in the expanded state of the main inflatable bag.

18. The airbag according to claim 1, **characterized in that** the lateral support structure is configured as a reboundable elastic element, the elastic element being configured to reduce bending or pivoting of the protruding portion through its own restoring force during a collision event.

19. The airbag according to claim 18, **characterized in that** the reboundable elastic element at least partially abuts against the outer lateral surface of the main body portion and the outer lateral surface of the protruding portion.

20. An airbag, comprising a main inflatable bag, wherein the main inflatable bag, in an expanded state, has a main body portion and two protruding portions extending outwardly from the main body portion on both sides of the main body portion, the two protruding portions together with the main body portion forming an intermediate recessed portion configured to receive an occupant's head during a collision event, **characterized in that** the airbag includes a pulling structure arranged within the main inflatable bag, the pulling structure being configured to pull the protruding portion to reduce bending or pivoting of the protruding portion relative to the main body portion during a collision event.

21. The airbag according to claim 20, **characterized in that** the connection part of the pulling structure on the protruding portion is located between the outer intermediate region and the top of the protruding portion.

22. The airbag according to claim 20, **characterized in that** the pulling structure comprises a first pulling element and a second pulling element, the first pulling element being connected at one end to an intermediate portion of the second pulling element, thereby forming a crossed Y-shaped pulling structure, wherein one leg of the Y-shaped structure is connected at its end to the protruding portion to reduce bending or pivoting of the protruding portion relative to the main body portion during a collision event.

23. The airbag according to claim 22, **characterized in that** the first pulling element is connected at the other end to a main panel forming the occupant-facing surface of the main inflatable bag.

24. The airbag according to claim 22, **characterized in that** the second pulling element is connected at one end to the protruding portion of the main inflatable bag and at the other end to another part of the airbag.

25. The airbag according to claim 24, **characterized in that** one end of the second pulling element is connected to the protruding portion of the main inflatable bag at the top of the protruding portion.

26. The airbag according to claim 25, **characterized in that** the contour of the top of the second pulling element arranged at the protruding portion is configured as a convex arc.

27. The airbag according to claim 24, **characterized in that** the other end of the second pulling element is connected to an outer section of the main body portion of the main inflatable bag.

28. The airbag according to claim 27, **characterized in that** the contour of the top of the second pulling element arranged at the main body portion is configured as a convex arc.

29. A vehicle, comprising the airbag according to any one of claims 1 to 28.

30. The vehicle according to claim 29, **characterized in that** the vehicle includes a center console display mounted on the instrument panel and an A-pillar, the airbag being installed in the instrument panel and configured to be activated during a vehicle collision event to prevent the occupant's head from impacting the center console display and/or sliding toward the A-pillar.
